**Europäisches Patentamt**

**European Patent Office**

**Office européen des brevets**

(19)

(11) **EP 1 729 261 A1**

(12) # EUROPEAN PATENT APPLICATION

(43) Date of publication:
**06.12.2006 Bulletin 2006/49**

(51) Int Cl.:
**G06T 11/00** *(2006.01)*    **G01N 21/47** *(2006.01)*

(21) Application number: **05011797.7**

(22) Date of filing: **01.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Deutsches Krebsforschungszentrum Stiftung des Öffentlichen Rechts**
**69120 Heidelberg (DE)**

(72) Inventors:
• **Schulz, Ralf**
**68159 - Mannheim (DE)**

• **Peter, Jörg, Dr.**
**96121 - Heidelberg (DE)**
• **Semmler, Wolfhard**
**69118 - Heidelberg (DE)**
• **Pavlov, Pavel**
**69124 - Heidelberg (DE)**

(74) Representative: **Isenbruck, Günter**
**Isenbruck, Bösl, Hörschler, Wichmann, Huhn**
**Patentanwälte**
**Theodor-Heuss-Anlage 12**
**68165 Mannheim (DE)**

(54) ## Method for tomographic reconstruction

(57)    The present invention relates to a method for tomographic reconstruction on the basis of an elliptic differential equation with unknown parameters $\kappa$, comprising

(a) determining a boundary surface $\delta\Omega$ of an object which is filling a space domain $\Omega$,

(b) directing waves emitted from at least one source through the boundary surface $\delta\Omega$ into the object,

(c) detecting intensities $\hat{\Phi}$ (measured intensities) of waves emitted from the object's surface $\delta\Omega$ on a part of the boundary surface $\delta\Omega$ with at least one detector by using a plurality of measurements and

(d) processing the measured intensities $\hat{\Phi}$ of waves emitted from the object's surface to generate a tomographic image.

Fig. 3

EP 1 729 261 A1

## Description

Field of the invention

The present invention relates to a method for tomographic reconstruction on the basis of an elliptic differential equation (e. g. the diffusion equation) with unknown parameters. These parameters are estimated by a method according to the present invention.

Background of the invention

Optical imaging techniques are emerging as alternative molecular imaging modalities, that detect light propagated through tissue at single or multiple projections. A number of optical-based imaging techniques are available, from macroscopic fluorescence reflectance imaging to fluorescence imaging and tomography that has recently demonstrated to localize and quantify fluorescent probes in deep tissues at high sensitivities at millimetre resolutions. In the near future, optical tomography techniques are expected to improve considerably in spatial resolution by employing higher-density measurements and advanced photon technologies, e. g. based upon modulated intensity light or very short photon pulses. Primary interest for using optical imaging techniques lies in the non-invasive and non-hazardous nature of optical photons used and most significantly in the availability of activatable probes, that produce a signal only when they interact with their targets. In optical tomography, images are influenced greatly by the spatially dependant absorption and scattering properties of tissue. Optical or fluorescence tomography systems usually require the use of fibers that are coupled to the object under examination either through direct contact or by using appropriate matching fluids. The fibers are used to direct light, e. g. generated by laser diodes, to and from the tissue to be examined. The use of fibers, however, has significant disadvantages i) due to the limited number of fibers that can be practically used, which may lead to insufficient spatial sampling of photon signals, ii) due to the complexity in retrieving complex boundaries and iii) due to coupling issues between tissue and optodes. A few studies have attempted to retrieve tissue boundaries using surface measurements after removing the optodes, which requires laborious procedures. However, most available systems employ a fixed geometry (i. e. a cylinder or a slab), either by compressing tissues to the desired shape or by immersing tissues into a fixed geometry chamber filled with an optically diffusive matching fluid to eliminate possible air-tissue interfaces. Such setups are simple to implement and suffice for basic feasibility studies but the matching fluid creates additional photon diffusion, and attenuation and tissue immersion in fluids is not always feasible or desirable. More recently, systems using lens coupled CCD cameras onto a slab-shaped imaging chamber have been investigated as an alternative to fiber systems. Such approaches offer high spatial sampling of photon fields along two dimensions but also require fixed geometries, tissue compression and matching fluids.

The use of fibers and/or optical matching fluids and fixed geometries reduces the experimental practicability and limits the tomographic capacity of the imaging system. These constraints result in significant limitations to the use of the systems either in research or in the clinic. Therefore, there is a need for non-contact systems and reconstruction methods for tomography of biological tissue and other objects with arbitrary boundaries.

Elliptic differential equations with unknown parameters like the Poisson, Helmholtz or diffusion equation have significant importance in several fields of physics. They are used to describe light propagation in scattering/diffuse media, the flow of ground water, the propagation of sound waves, the propagation of electromagnetic waves and others. A fast classical way to estimate parameters in aforementioned equation is a perturbation approach and the linearization of the equation via its homogeneous Green function. For arbitrary domains, however, calculation of the Green function - even for the homogeneous case - poses a major problem that can be solved e. g. by further approximations that require complex calculations. The determination of Green functions for arbitrary geometries involves either the solution to a high number of forward problems solved with finite elements on the required domain or further approximations like the Kirchhoff approximation. The latter reduces the computational effort which, however, still remains expensive. Also strongly curved boundaries produce higher errors, as the Kirchhoff approximation is only good for very smooth surfaces. Numerical studies based on finite elements to date have only used model based iterative inversion methods (MOBIR) or gradient-based methods. The main disadvantage of said methods is the costly recalculation of the forward solution performed in every single iteration of the algorithm.

Other methods of inversion based on statistical methods or the like have up to now only shown their principal feasibility, but their computational complexity is at the time being prohibitive for use of reconstruction.

WO 95/12132 refers to a method of imaging an object in a turbid medium using diffuse light comprising the steps of: illuminating the object with oscillatory diffuse photon density waves; detecting diffused density waves which are produced as a result of the diffuse photon density waves interacting with the object; and determining at least the position of the object in the turbid medium by analyzing the detected diffused photon density waves. The diffusion equation is used to describe the waves of light propagated through the medium. Object location is determined by using a linearized Green function approach employing precomputed or analytically available Green functions.

A gradient-based iterative image reconstruction method for optical tomography is described in "Parallel programming of gradient-based iterative image reconstruction schemes for optical tomography", Computer Methods and Programmes in Biomedicine (2004) 73, 101 - 113.

WO 03/102558 is directed to a method for tomographic imaging of a medium comprising:

(a) directing waves into a medium having a boundary S;
(b) detecting an intensity of waves emitted from the medium by using contact or non-contact measurements of waves outside the medium; and
(c) processing the detected intensity to generate a tomographic image.

In step (c) of this method, the Green function is determined. With respect to its parameters, the diffusion equation is linearized and then inverted employing the Green function and a first order small perturbation approach (Born approximation). While this results in a linear system quickly solvable with standard methods, the solution is disturbed by inhomogeneities of the domain. The novelty of patent WO 03/102558 compared to previously described methods is the implementation of proper boundary conditions within the context of fluorescence tomography using an iterative approach. Iterative solutions enable the balancing of computational load and precision. However, the computational effort for exact boundary conditions is very high, and the use of only one iteration leads to strong artefacts if the boundary is strongly curved (shadowing artefacts).

Summary of the invention

The present invention is based on the object of avoiding the disadvantages of the prior art and to propose a fast computer-based method to accurately estimate the unknown parameters of an elliptic differential equation e. g. for tomographic reconstruction.

This object is achieved by a method for tomographic reconstruction on the basis of an elliptic differential equation with unknown parameters $\kappa$, comprising

(a) determining a boundary surface $\partial\Omega$ of an object which is filling a space domain $\Omega$,
(b) directing waves emitted from at least one source through the boundary surface $\partial\Omega$ into the object,
(c) detecting intensities $\hat{\Phi}$ (measured intensities) of waves emitted from the object's boundary surface $\partial\Omega$ on a part of the boundary surface $\partial\Omega$ with at least one detector by using a plurality of measurements and
(d) processing the measured intensities $\hat{\Phi}$ of waves emitted from the object surface $\partial\Omega$ to generate a tomographic image,

wherein step (d) includes

i) generating a finite element mesh with test functions, the finite element mesh representing the space domain $\Omega$ and the boundary surface $\partial\Omega$ of the object,
ii) formulating the parameters $\kappa$ and the solution intensities $\Phi$ of the elliptic differential equation on the basis of the finite element mesh and the test functions,
iii) setting up a measurement function $m_k (\Phi, \hat{\Phi})$ for each of the measurements, which defines a measure for the difference between the measured intensities $\hat{\Phi}$ and the solution intensities $\Phi$,
iv) formulating a Lagrange functional containing Lagrange multipliers $\lambda$, the Lagrange functional incorporating the measurement functions $m_k (\Phi, \hat{\Phi})$ and the differential equation under boundary conditions,
v) minimizing the Lagrange functional by a gradient based method using Gateaux-derivatives of the parameters and of the solution intensities to determine the solution intensities $\Phi$, the parameters $\kappa$ and the Lagrange multipliers $\lambda$,
vi) refining the finite element mesh on the basis of an error estimator, which is derived from the Lagrange multipliers $\lambda$ and repeating steps v) and vi) or stopping.

The parameter estimation approach presented herein has several advantages over the approaches in the state of the art:

• Boundaries of the object only have to be included in the creation of the finite element mesh. From that point on, the actual boundary condition is implied in the weak form of the problem formulation.
• The forward problem does not have to be solved, especially not for each considered point within the domain.
• The shadowing of sources as the main source of numerical errors does not have an effect on the solution, simply because the true topology of the domain is modelled via the finite element system. Moreover, the projection needed for actual non-contact measurements can be performed on the real boundary values of the solution to the differential equation.

Parameter estimation with finite elements works on a domain modelled from the real domain $\Omega$ of the object and thus creates small discretization artefacts that can easily be error-controlled via an error estimator and adaptive refinement. Other solutions like the iterative solution described in WO 03/102558 create significant deviations from the real solution to the diffusion equation by the use of strong approximations like the Kirchhoff approximation to boundary effects.

The method according to the present invention uses an elliptic differential equation with unknown parameters $\kappa$. According to a preferred embodiment of the present invention, the elliptic differential equation can be written as

$$\left( \nu \tfrac{\partial}{\partial t} + \nabla \kappa_1(\mathbf{r}) \nabla + \kappa_2(\mathbf{r}) \right) \Phi(\mathbf{r}, t) = s(\mathbf{r}, t) \tag{1}$$

This elliptic differential equation is defined within a subdomain $\Omega$ of $(n+1)$-space, with $r = (r_1, r_2, ..., r_n) \in \Omega \subseteq \mathbb{R}^n$ and $t$ being the time axis. Functions $\kappa_1$ and $\kappa_2$ are called *coefficients* or *parameters* of the equation as they determine the differential operator. Function $s$ is called the *source function*, $\Phi$ is called *the forward solution of the differential equation.*

The method described herein focuses on determining the parameters $\kappa_1$, $\kappa_2$ through a set of measurements. Measurements concern only $\Phi$. A *measurement i* can be visualized for example as a set of measured values $\hat{\Phi}_i$ under a given source function $s_i$ at distinct points / within a compact region in $\Omega$ or on its border, $\partial\Omega$. The parameters $\kappa_1$ and $\kappa_2$ are preferably selected from the group of absorption coefficient, dispersion coefficient, diffusion length, reduced scattering coefficient and parameters derived therefrom. If the source function $s_i$ is omitted, it could also be estimated using the proposed method, e.g. for reconstructions of interior sources, e.g. in the case of bioluminescence imaging.

A very important aspect of the present invention is the source intensity that appears on the right side of (1). While collimated sources are modelled as point sources in the mathematical framework, that lie one diffusion length into the medium, their source strength needs to be taken into account and is crucial for *quantitative* reconstruction of the optical parameters, as otherwise, the optical parameters will be wrongly estimated by a factor of $\hat{\Theta}_s \Theta_s^{-1}$, where $\hat{\Theta}_s$ is the assumed source power, and $\Theta_s$ is the true power of the source. For multi-physics experiments (i.e. experiments with several independent measurements), a constant source is necessary, or at least reference measurements to show relative movements of source power.

For the differential equation (1) one or a mix of the following boundary conditions can be chosen:

Dirichlet: $\qquad \Phi\big|_{\Gamma \subset \Omega} = h\big|_{\Gamma \subset \Omega}$, $\qquad\qquad\qquad \Phi\big|_{t=t_0} = g\big|_{t=t_0}$

Neumann: $\qquad \mathbf{n} \cdot \nabla\Phi\big|_{\Gamma \subset \partial\Omega} = h\big|_{\Gamma \subset \partial\Omega}$, $\qquad\qquad \nu\tfrac{\partial}{\partial t}\Phi\big|_{t=t_0} = g\big|_{t=t_0}$

Robin: $\qquad \mathbf{n} \cdot \nabla\Phi\big|_{\Gamma \subset \partial\Omega} + f(\Phi)\big|_{\Gamma \subset \partial\Omega} = h\big|_{\Gamma \subset \partial\Omega}$, $\qquad \nu\tfrac{\partial}{\partial t}\Phi\big|_{t=t_0} + f(\Phi)\big|_{t=t_0} = h\big|_{t=t_0}$

The notation $f|_{\Gamma}$ in the given formulas shall denote the validity of the equation for a space domain $\Gamma$, and $f|_t$ for a time domain $t$, respectively.

In step (a) of the method according to the invention, the boundary surface of the imaged object is determined. This boundary surface is used (in step i)) to generate a finite element mesh with test functions. The finite element method (FEM) provides a way of solving partial differential equations numerically i.e. of finding a function that satisfies the partial differential equation under given boundary or initial conditions. This solution function is supposed to be the sum of a plurality of given test functions which are each weighted by a coefficient.

While arbitrary domains $\Omega$ can be handled by a mathematical framework presented in form of a finite element mesh, in an experimental setting a suitable element mesh has to be created from shape information about the object under examination. The necessary properties of such a finite element mesh are:

- The mesh boundaries have to depict the real object boundaries
- The cells may not be degraded; i.e. certain constraints have to be imposed on cell side length, inner angles, and the like to guarantee that a solution on the finite element mesh is a good solution. As finite element functions are usually calculated on a unit cell (either tetrahedron, or hexahedron) real coordinates are projected into cell space, and this projection should not be degenerated. In the following text only hexahedral elements are treated exemplarily. By way of example, a finite element system based on the freely available DEAL-II library (www.dealii.org) can be implemented. This library uses hexahedral meshes that can be employed in a dimension-independent way.

The surface of the object under examination can be obtained in step (n) of the method according to the invention by one of the following methods:

- Use of structured light and two or more cameras observing the object from different angles (see for example patent US 6,600,168 and documents cited therein).
- Use of a laser scanning system.

Another possibility for nearly radially symmetric objects uses a camera rotating around the object and illuminating it with a very diffuse light source (e.g. an electroluminescent foil, Lumitec, Switzerland) which will not cast shadows. The object is encapsulated in a very dark environment so that all acquired images show the illuminated object with a black background. Border extraction by standard algorithms (edge filters, etc.) leads to a projection of the objects boundaries into two-dimensional planes. If many projection angles are used, the object's exterior shape can accurately be recovered unless the object shows a highly varying curvature on the outside.

The boundary description itself consists of a set of points and their topological relationship (i.e. neighbour relations). Inside that boundary, a coarse mesh has to be fitted that, under refinement, tends to the original geometry.

For cylinder-like geometries, as found for small animals (mice, rats), a non-degenerate mesh can be created in the following way:

- Equally spaced points on the boundaries are chosen.
- The boundary is duplicated inside the object at a smaller size (scaled by a factor of $a$, usually so that the interior boundary line covers 1/4 of the area, that means that each axis is scaled by 1/2). The chosen points in both boundaries are connected to yield hexahedral elements.
- This process is repeated on the interior until the size of the boundary can be approximated by a simple, non-deformed hexahedral element.
- This last element has to be split to connect all the endpoints of the formerly created interior elements. The number of the initially chosen points thus determines the number of elements needed in the end and should per boundary line be a multiple of 4.
- For each refinement on boundary cells, the actual boundary description is used, so that further refinement leads to a better representation of the actual boundary.

In steps (b) and (c) of the method according to the present invention, waves are directed into the object and the intensities of waves emitted from the object are detected. These waves can be for example light waves, ultrasound waves or sound waves.

In one preferred embodiment of the present invention, the waves directed into the object in step (b) and the waves emitted from the object in step (c) are of different frequencies. One example for this case is fluorescence imaging. In fluorescence imaging, light of one excitation wavelength illuminates the imaging object, resulting in a shifted emission wave length that can be collected by CCD-cameras. The imaging object is labelled for this purpose, using a variety of fluorescence probes. Smart probes have been developed that can be activated and detected only when they interact with a certain target, e. g. a small molecule, peptide, enzyme substrate or antibody.

According to one preferred embodiment of the present invention, the waves directed into the object in step (b) and the waves emitted from the object in step (c) are different kinds of waves selected from the group of light waves, ultrasound waves and sound waves. The waves in steps (b) and (c) can also be of the same kind and/or of the same frequency.

The measured intensities are, according to the method of the present invention, processed to generate a tomographic image. The processing comprises the steps i) to vi).

The test functions, which are generated in step i), are preferably chosen, having only a local support on the finite element mesh. It is also possible to choose test functions which are based on the Fourier series.

In a preferred embodiment of the present invention, the finite element mesh is generated by using the standard Galerkin approach. Thereby a finite element system for the time-independent variant of (1) can be obtained (by using the standard Galerkin approach of finite element analysis), which yields the weak formulation of the problem:

$$\left(\nabla\varphi_i, \kappa_1(\mathbf{r})\nabla\Phi(\mathbf{r})\right)_\Omega + \left(\varphi_i, \kappa_2(\mathbf{r})\Phi(\mathbf{r})\right)_\Omega - \left(\varphi_i, \kappa_1(\mathbf{r})\mathbf{n}\cdot\nabla\Phi(\mathbf{r})\right)_{\partial\Omega} = \left(\varphi_i, s(\mathbf{r})\right) \qquad (2)$$

for all test functions $\varphi_i$, where $(a,b)_\Omega = \int_\Omega a(\mathbf{r})b(\mathbf{r})d\mathbf{r}$ is the scalar product on the full domain $\Omega$ and $(a,b)_{\partial\Omega} = \int_{\partial\Omega}(\mathbf{r})b(\mathbf{r})d\mathbf{r}$ is the scalar product on its boundary $\partial\Omega$. The latter integral is replaced by an equivalent for the respective boundary condition. In terms of finite element analysis this is called the representation of the boundary condition in weak form. For Dirichlet boundaries, for example, it would be zero.

Step (ii) of the method according to the present invention, is then carried out by setting $\Phi_s = \Sigma_j\alpha_j\varphi_j, \alpha_j \in \mathbb{R}$, turning the left hand side of (2) into a matrix-vector equation where the vector contains the unknown coefficients $\alpha$ while the matrix contains the scalar products only depending on the test functions. With an appropriate choice of functions, the matrix is sparse and the equation can be inverted quickly, resulting in a solution for $\alpha$, called the *forward solution.* For parameter estimation, not only $\Phi$ is to be represented by a sum of test functions, but also the parameters $\kappa_1$ and $\kappa_2$, so that $\kappa_p = \sum_j \omega_j^p \psi_j^p, \omega_j^p \in \mathbb{R}$. These test functions $\psi$ need not be of the same kind as $\varphi$ and need not be based on the same grid.

For the time-dependent problem, one can either choose a finite difference or finite element scheme on the time axis. A finite difference scheme would result in (for the sake of brevity, the dependence on r has been omitted):

$$\tfrac{v}{\Delta t}\left(\Phi^{t+\Delta t} - \Phi^t\right) + \left(\nabla\varphi_i, \kappa_1\nabla\Phi^t\right)_\Omega + \left(\varphi_i, \kappa_2\Phi^t\right)_\Omega - \left(\varphi_i, \kappa_1\mathbf{n}\cdot\nabla\Phi^t\right)_{\partial\Omega} = \left(\varphi_i, s\right)_\Omega \qquad (3)$$

If time should be discretized in an adaptive way, one could also use an interpolation approach like a finite element approach. In this case the time-dependency will be covered with a series representation $\Phi(\mathbf{r},t) = \Sigma_{i,j}\,\alpha_{i,j}\varphi_j(\mathbf{r})\tau_i(t)$ where $\tau_i$ are test functions along the time axis. This leads to:

$$\left(\tau_j, v\tfrac{\partial}{\partial t}\Phi^t\right)_T + \left(\nabla\varphi_i, \kappa_1\nabla\Phi^t\right)_\Omega + \left(\varphi_i, \kappa_2\Phi^t\right)_\Omega - \left(\varphi_i, \kappa_1\mathbf{n}\cdot\nabla\Phi^t\right)_{\partial\Omega} = \left(\varphi_i\tau_j, s\right)_{\Omega,T} \qquad (4)$$

In step iii) of the method according to the present invention, a measurement function $m_k(\Phi, \hat{\Phi})$ is set up. A measurement *i* is indirectly defined through a measurement function $m_i(\Phi, \hat{\Phi}) \rightarrow \mathbb{R}_0^+$ that defines a measure for the difference between measurement $\Phi_i$ and solution $\Phi_i$. Generally, parameter estimation is performed by iteratively updating the coefficients and generating a new solution which is then "compared" to the measurements. Here, the comparisons comprise of calculating and minimizing *m*.

Two different types of measurement functionals can be considered for experimental use: a functional describing the photon exitance on the boundary as measured by a glass fiber in contact with the object under examination (while this object still can be of arbitrary shape), and a functional for real non-contact measurements.

The measurement operator for fiber-based measurements on the boundary needs to relate values of $\Phi$ on the boundary to measurements $\Phi=(\Phi_1,\Phi_2,...,\Phi_i)$ at points $\mathbf{r}_i$ on the boundary. This could be performed for example by a square error norm operator with a projection of $\Phi$ onto discrete boundary points:

$$m\left(\Phi, \hat{\Phi}\right) = \tfrac{1}{2}\left\|\Phi - \hat{\Phi}\right\|_{\partial\Omega}^2 = \tfrac{1}{2}\sum_i\left(\sum_j \alpha_j\varphi_j(\mathbf{r}_i) - \hat{\Phi}_i\right)^2 \qquad (5)$$

The derivative then evaluates to:

$$\nabla_{\Phi} m\left(\Phi,\hat{\Phi};\varphi_j\right) = \sum_i \left(\sum_k \alpha_k \varphi_k(\mathbf{r}_i) - \hat{\Phi}_i\right)\varphi_j \tag{6}$$

For high density of detectors, instead of using discrete points, the whole boundary integral could be used, leading to the continuous version:

$$m\left(\Phi,\hat{\Phi}\right) = \tfrac{1}{2}\left\|\Phi - \hat{\Phi}\right\|_{\partial\Omega}^2 = \tfrac{1}{2}\left(\Phi - \hat{\Phi}, \Phi - \hat{\Phi}\right)_{\partial\Omega} \approx \tfrac{1}{2}\left(\Phi,\Phi\right)_{\partial\Omega} - \left(\Phi,\hat{\Phi}\right)_{\partial\Omega} \tag{7}$$

The derivative then evaluates to:

$$\nabla_{\Phi} m\left(\Phi,\hat{\Phi};\varphi_j\right) = \left(\varphi_j,\Phi\right)_{\partial\Omega} - \left(\varphi_j,\hat{\Phi}\right)_{\partial\Omega} \tag{8}$$

While the second part of expression (8) remains constant over the course of the parameter estimation process (and could thus be calculated once in the beginning), the first part can, by the same arguments as used before, transformed into a sum consisting of precomputed integrals to decrease the time of computation:

$$\left(\varphi_j,\Phi\right)_{\partial\Omega} = \sum_i \alpha_i \left(\varphi_j,\varphi_i\right)_{\partial\Omega} \tag{9}$$

For non-contact measurements, obviously different expressions are needed. Here the problem is to find a transformation from values on the boundary to values at a distant detector.

One possibility is to assume a general linear imaging operator $F_{\Omega\to\Xi}$ that maps values on the boundary of $\Omega$ to values on the detector domain $\Xi$, taking into account effects like the position of the detector relative to the respective point on the boundary, the numerical aperture of the detector, the detector normal, the surface normal, geometric lens aberrations, etc. The measurement operator for detector measurements $\hat{\Xi}$ is then written as:

$$m\left(\Phi,\hat{\Xi}\right) = \tfrac{1}{2}\left\|F(\Phi) - \hat{\Xi}\right\|_{\Xi}^2 = \tfrac{1}{2}\left(F(\Phi) - \hat{\Xi}, F(\Phi) - \hat{\Xi}\right)_{\Xi}$$
$$\text{with:} \qquad F(\Phi) = \sum_i \alpha_i F(\varphi_i)$$
$$\Rightarrow \qquad m\left(\Phi,\hat{\Xi}\right) \approx \tfrac{1}{2}\left(F(\Phi), F(\Phi)\right)_{\Xi} - \left(F(\Phi),\hat{\Xi}\right)_{\Xi} \tag{10}$$
$$= \sum_{i,j} \alpha_i \alpha_j \left(F(\varphi_i), F(\varphi_j)\right)_{\Xi} - \sum_i \alpha_i \left(F(\varphi_i),\hat{\Xi}\right)_{\Xi}$$

To summarize, no matter what kind of linear projection function is used, it is a base transformation of the test functions. So it is only needed, prior to starting the inversion, to transform the base functions onto the detectors. This, of course, can change some of the test function properties, for example the test functions that overlap. However, this is only the case if some kind of blur (e.g. depth of field effects) is introduced by the detectors.

Also note, that only test functions that have support on the boundaries, have to be transformed.

As far as the derivative is concerned, it can be concluded that:

$$\nabla_{\Phi} m\left(\Phi, \hat{\Xi}; \varphi_i\right) = \left(F(\varphi_i), F(\Phi)\right)_{\Xi} - \left(F(\varphi_i), \hat{\Xi}\right)_{\Xi} \tag{11}$$

So also the derivative only depends on the transformed test functions again. Thus, a parameter estimation scheme is proposed where the projections of test functions on the boundary is carried out first and these projections are kept in memory. If the projection is invertible, of course, measurements could be transformed into the original space.

In a preferred embodiment of the invention, the linearity of the measurement operator is taken even further. Detection is considered to occur on a two-dimensional object called the detector, which is usually part of a plane called the detection plane. The detector could however also be a general two-dimensional object like a semi-cylindrical surface, a composition of several planes, or the like. The detected values $\Xi$ (called the measurements) on the two-dimensional detector can be approximated in a least-square sense by a sum based on a finite subdivision of the detector (a finite element mesh) and according detector test functions $\Xi_i$:

$$\hat{\Xi} = \sum_i d_i \Xi_i$$

The coefficients $d$ are considered to linearly depend on the degrees of freedom on the boundary of the object. This can be described by the vector-matrix relation $\mathbf{d} = \Xi\Phi$ with $\mathbf{d}$ being the vector of the coefficients $d$ that best describe the predicted measurements, $\Phi$ the vector of all coefficients $\Phi_i$ of the finite element mesh describing the imaged object, and $\Xi$ being the *detector matrix,* taking the role of the operator $F_{\Omega \to \Xi}$ described above.

The measurement functional and its derivative for this approach then results in the following relation employing the transpose detector matrix $\Xi^T$:

$$m(\Phi, \hat{\Xi}) \quad = \tfrac{1}{2}\left|\Xi\Phi - \hat{\Xi}\right|^2$$

$$\nabla_{\Phi} m(\Phi, \hat{\Xi}) = \Xi^T\left(\Xi\Phi - \hat{\Xi}\right)$$

Compared to the linear mapping approach it can model depth-of-field effects (blur) while minimizing the computational effort.

The advantage of the measurement functional approaches over existing approaches is manifold:

• Calculations can be carried out with better integral representations (i.e. accurate quadrature rules) instead of a simple sum approach
• The projection is only to be carried out for test functions with support on (visible) boundary faces of the domain. In the existing approaches for the calculation of linearized Green functions, the projection has to be carried out and be inverted for each point ever considered within the domain.
• Any kind of (linear) projection can be implemented, for example a correction for lens aberrations. This is especially important for imager designs that are required to be small and where wide angle lenses are employed which can not be covered with the existing approaches.

The complete problem of step (d) of the method according to the present invention can now be seen as a minimization problem

$$\forall_k m_k(\Phi, \hat{\Phi}) \to \min, \tag{12}$$

constrained by one of the following constraint sets:

$$h_i := \left(\nabla\varphi_i, \kappa_1\nabla\Phi\right)_\Omega + \left(\varphi_i, \kappa_2\Phi\right)_\Omega - \left(\varphi_i, \kappa_1 \mathrm{n}\cdot\nabla\Phi\right)_{\partial\Omega} - \left(\varphi_i, s\right)_\Omega = 0$$

$$h_{t,i} := \frac{v}{\Delta t}\left(\Phi^{t+\Delta t} - \Phi^t\right) + \left(\nabla\varphi_t, \kappa_1\nabla\Phi^t\right)_\Omega + \left(\varphi_i, \kappa_2\Phi^t\right)_\Omega - \left(\varphi_i, \kappa_1 \mathrm{n}\cdot\nabla\Phi^t\right)_{\partial\Omega} - \left(\varphi_i, s^t\right)_\Omega = 0$$

$$h_{i,j} := \left(\tau_j, v\tfrac{\partial}{\partial t}\Phi\right)_T + \left(\nabla\varphi_i, \kappa_1\nabla\Phi^t\right)_\Omega + \left(\varphi_i, \kappa_2\Phi^t\right)_\Omega - \left(\varphi_i, \kappa_1 \mathrm{n}\cdot\nabla\Phi^t\right)_{\partial\Omega} - \left(\varphi_i\tau_j, s\right)_{\Omega,T} = 0$$

The first constraint set is used for the time-independent variant according to equation (2), the second and third for the time-dependent variant according to equation (3) and equation (4) respectively.
Additionally, bound constraints can be applied:

$$\Phi \geq 0$$

$$\kappa_{\min} \leq \kappa \leq \kappa_{\max}$$

In step iv) of the method according to the present invention, a Lagrange functional is formulated. This Lagrange functional is preferably written as

$$L = \sum_k \left| m_k(\Phi, \hat{\Phi}) \right| + \sum_i \tfrac{c_i}{2} \left\| h_i \right\|^2 + \sum_i \lambda_i h_i \qquad (13)$$

with the Lagrange multipliers $\lambda_i$, transforming the constraint problem without bound constraints into the following unconstrained minimization problem: $L \to$ min.
$h_i$ are the individual constraints that apply for the problem. There are also different formulations of the Lagrangian L, and the following algorithmic details apply for any of them. For example, regularization terms can be added if necessary.
The minimum is determined in step v) via a gradient based method. The first order condition of a minimum is

$$\nabla L = 0 \qquad (14)$$

The gradient is calculated with respect to the parameters of $L$. These parameters are the coefficients of the sum representation of the unknown parameters $\kappa_1$, $\kappa_2$, $\Phi$ and $\lambda$. As a gradient, Gateaux-differentials are used. In short, these functional derivatives of a functional F are evaluated with respect to a test function $\xi$ by:

$$\nabla_x F\left(x; \xi\right) = \lim_{h\to 0} \frac{F(x+h\xi) - F(x)}{h} \qquad (15)$$

They evaluate for the spatial integrals in equations (2), (3) or (4) to:

$$\nabla_{\kappa_1;\psi_j^1}\left(\nabla\varphi_i,\kappa_1\nabla\Phi\right)_\Omega \qquad = \left(\nabla\varphi_i,\psi_j^1\nabla\Phi\right)_\Omega$$

$$\nabla_{\kappa_2;\psi_j^2}\left(\varphi_i,\kappa_2\Phi\right)_\Omega \qquad = \left(\varphi_i,\psi_j^2\Phi\right)_\Omega \qquad\qquad (16)$$

$$\nabla_{\Phi;\varphi_j}\left(\nabla\varphi_i,\kappa_1\nabla\Phi\right)_\Omega + \left(\varphi_i,\kappa_2\Phi\right)_\Omega = \left(\nabla\varphi_i,\kappa_1\nabla\varphi_j\right)_\Omega + \left(\varphi_i,\kappa_2\varphi_j\right)_\Omega$$

and so forth. Differentiating the measurement operator depends on the actual measurement operator functional, and can be performed according to (15). The total gradient of L results in the following:

$$\nabla_\Phi L\left(\Phi,\kappa_1,\kappa_2,\lambda;\varphi\right) = \sum_k \nabla_\Phi \left|m_k(\Phi,\hat{\Phi};\varphi)\right| + \sum_i \left(c_i h_i + \lambda_i\right)\nabla_\Phi h_i\left(\Phi,\kappa_1,\kappa_2;\varphi\right) \equiv 0$$

$$\nabla_{\kappa_1} L\left(\Phi,\kappa_1,\kappa_2,\lambda;\psi^1\right) = \sum_i \left(c_i h_i + \lambda_i\right)\nabla_{\kappa_1} h_i\left(\Phi,\kappa_1,\kappa_2;\psi^1\right) \equiv 0$$

$$\nabla_{\kappa_2} L\left(\Phi,\kappa_1,\kappa_2,\lambda;\psi^2\right) = \sum_i \left(c_i h_i + \lambda_i\right)\nabla_{\kappa_2} h_i\left(\Phi,\kappa_1,\kappa_2;\psi^2\right) \equiv 0$$

The functionals $h$ can be chosen according to the time-dependent or -independent models mentioned before. If $\lambda$ is also considered to be represented by a sum, minimization can take into account the result gradient along $\lambda$ and minimize the Lagrange multiplier together with the other parameters. However, for the first order method exemplarily described herein, this is not necessary.

According to a preferred embodiment of the present invention, the minimization of the Lagrange functional starts at an initial parameter set, using the gradients at that point in parameter space to change the parameters $\kappa$ accordingly. The initial set of parameters $\Phi$ can be found by calculating the forward problem once or by assuming a first set of parameters. The parameters can be estimated by starting from an initial solution and changing the parameters according to the gradients, using any nonlinear inversion technique (e.g. a first or second order of multipliers). Whatever method is chosen, the time-critical operation is the calculation of the value of $L$ and of its derivative. One advantage of applying the augmented Lagrangian method as described herein to the problem of optical tomography or the diffusion equation is the automatic update of $\Phi$ without having to solve the forward problem more than once (for the calculation of the initial parameter set).

As according to a preferred embodiment of the present invention, minimizing the Lagrange functional comprises the calculation of a plurality of weighted summations of scalar products of the test functions and of the test functions with derivatives of the test functions. Preferably, at least some of the scalar products are calculated and stored before step v) is carried out. The main computational effort of the method according to the present invention lies in the computation of L and its derivatives. As no forward solution has to be calculated, also no system matrix has to be built. Instead, all that is necessary for example for the above described preferred embodiment is a precomputed solution of the following components:

$$\left(\nabla\varphi_i,\psi_j^1\nabla\varphi_k\right)_\Omega$$

$$\left(\varphi_i,\psi_j^2\varphi_k\right)_\Omega$$

together with some others (depending on the actual problem). If any additional integrals are necessary, the following is still valid for them.

These integrals have to be calculated for all combinations of $i, j,$ and $k$, but as finite elements only have limited support, most of these combinations are zero. Thus, only for a local (i.e. cell based) combination, the calculation is necessary and the real amount of space needed for storing each integral will be $n_{celldofs}3 \times n_{cells}$, where $n_{celldofs}$ is the number of intersecting test functions per element ("cell") and $n_{cells}$ is the number of cells. This means that the amount of space needed is linearly increasing with the number of cells. As can be shown later on, locally changing the grid only requires very small computational effort as most of the integrals remain unaffected.

With the above representation, the respective terms in (13) and (14) become:

$$\left(\nabla\varphi_i, \kappa_1\nabla\Phi\right)_\Omega = \sum_{j,k}\omega_j^1\alpha_k\left(\nabla\varphi_i, \psi_j^1\nabla\varphi_k\right)_\Omega$$

$$\left(\varphi_i, \kappa_2\Phi\right)_\Omega = \sum_{j,k}\omega_j^2\alpha_k\left(\varphi_i, \psi_j^2\varphi_k\right)_\Omega$$

$$\nabla_{\kappa_1}\left(\nabla\varphi_i, \kappa_1\nabla\Phi\right)_\Omega = \sum_k\alpha_k\left(\nabla\varphi_i, \psi_j^1\nabla\varphi_k\right)_\Omega$$

$$\nabla_{\kappa_2}\left(\varphi_i, \kappa_2\Phi\right)_\Omega = \sum_k\alpha_k\left(\varphi_i, \psi_j^2\varphi_k\right)_\Omega$$

$$\nabla_\Phi\left(\nabla\varphi_i, \kappa_1\nabla\Phi\right)_\Omega = \sum_j\omega_j^1\left(\nabla\varphi_i, \psi_j^1\nabla\varphi_k\right)_\Omega$$

$$\nabla_\Phi\left(\varphi_i, \kappa_2\Phi\right)_\Omega = \sum_j\omega_j^2\left(\varphi_i, \psi_j^2\varphi_k\right)_\Omega$$

These weighted summations of scalar products and in some cases of their derivatives can be calculated quickly, since they are non-zero only in those cells of the finite element mesh in which their respective supports overlap. It is obvious that the evaluation of $\nabla L$ and $L$ can be combined very efficiently, as both consist of nearly the same terms.

According to a preferred embodiment of the present invention, the scalar products are calculated in parallel by a plurality of processors. One remarkable property of the above cited equations with the weighted summations of the scalar products is their high intrinsic parallelism. Parallel execution can be performed

- On a cell basis, i.e. each available processor maintains the respective integrals of only a subgroup of the complete finite element mesh.
- On a parameter basis, i.e. each available processor maintains all integrals with respect to one free parameter. Another processor can maintain the measurement operator and the field functions $\Phi$.
- On a measurement basis, i.e. if multiple experiments were performed and thus there are a number of systems of type (13), where each of these systems can be calculated individually.

The gradient-based minimization itself is normally not parallel, but only accounts for a low percentage of computational expense.

In step vi) of the method according to the present invention, the finite element mesh is refined. According to a preferred embodiment of the present invention, each parameter $\kappa$ of the elliptic differential equation is represented (in step ii)) by a sum of different test functions. The parameters $\kappa$ can be formulated in step ii) on the basis of different finite element meshes, on which the test functions are defined. Another possibility is that all test functions are initially based on the same finite element mesh, the finite element mesh being refined in step vi) for each parameter individually on the basis of a parameter-based error estimator. If cells are always refined in the same way (e.g. by splitting tetrahedrical elements in five similar tetraheders by halving each side length, or performing the same operation on hexahedrons to get eight new elements), all cells for any parameter are either mother cells (nodes of the cell hierarchy) or most refined cells (leaves of the cell hierarchy) with respect to the whole cell population. Thus, a "most refined" grid can be created that consists of the finest cells. Also, finite element test functions are usually chosen as interpolation functions, so that the projection of a coarse cell onto refined cells can easily be performed. For all individual grids, hanging node constraints have to be taken into account. The refinement of a finite element mesh on the basis of an error estimator is known in the state of the art, for example from Roland Becker, Boris Vexler: A Posteriori Error Estimation for Finite Element Discretization of Parameter Identification Problems, Numer. Math. 96 (3), 435-459, 2004; Ascher, Haber: A multigrid method for distributed parameter estimation problems, Electronic Transactions on Numerical Analysis 15, 1-17, 2003; Ascher, Haber: Grid Refinement and Scaling for Distributed Parameter Estimation Problems, Inverse Problems 17 (3) Article 314 (2001); Falk: Error Estimates for the Numerical Identification of a Variable Coefficient, Mathematics of Computation, 40 (162), 537-546, 1983; Blum, Suttmeier: Weighted Error Estimates for Finite Element Solutions of Variational Inequalities, Computing 65, 119-134, 2000 or Becker, Kapp, Rannacher: Adaptive Finite Element Methods for Optimal Control of Partial Differential Equations: Basic Concept, SIAM Journal on Control and Optimization 39 (1), 113-132, 2000.

The novelty of the approach according to the present invention lies in the completely independent grids that can be used. Thus, for each parameter, an own error estimator can be used. All the transformation problems between the grids can be solved if the finest grid and the refinement procedure for a cell is the same for all parameters.

In step vi) of the method according to the present invention, after refining the finite element mesh, steps v) and vi) are repeated or the determination of the parameters is stopped. Possible stopping criteria are one or more of the following criteria:

- Reduction of all gradient components below a certain value
- Reduction of all gradient components below a certain percentage of the original value
- Reduction of the value of the Lagrangian functional below a certain value
- Reduction of the value of the Lagrangian functional below a certain percentage of the original value

According to a preferred embodiment of the present invention, a calibration of at least one detector's sensitivity and of at least one source's intensity is carried out before step (a). One of the most important issues with respect to *quantitative imaging* is a calibration of detector sensitivity and source intensity. Quantitative imaging means in this context that the unknown parameters of the elliptic differential equation are represented in units according to the International System of Units, with the objective to enable the imaging of objects independently of the imaging device and of the imaging method yielding comparable results. The method according to the present invention for quantitative imaging with an imaging system based on an elliptic differential equation with unknown parameters $\kappa$ comprises the following steps:

(A) calibrating the sensitivity of at least one detector and of at least one source, taking imaging characteristics of the imaging system into account,
(B) determining a boundary surface $\delta\Omega$ of an object which is filling a space domain $\Omega$,
(C) directing waves emitted from at least one source through the boundary surface $\delta\Omega$ into the object,
(D) detecting intensities $\hat{\Phi}$ (measured intensies) of waves emitted from the object surface $\delta\Omega$ on a part of the boundary surface $\delta\Omega$ with the at least one detector by using a plurality of measurements and
(E) processing the measured intensities $\hat{\Phi}$ of waves emitted from the object surface $\delta\Omega$ to generate a tomographic image, wherein
step (E) includes

i) generating a finite element mesh with test functions, the finite element mesh representing the space domain $\Omega$ and the boundary surface $\delta\Omega$ of the object,
ii) formulating the parameters $\kappa$ and solution intensities $\Phi$ of the elliptic differential equation on the basis of the finite element mesh and the test functions,
iii) setting up a measurement function $m_k$ $(\Phi, \hat{\Phi})$ for each of the measurements, which defines a measure for the difference between the measured intensities $\hat{\Phi}$ and the solution intensities $\Phi$, the measurement function accounting for the imaging characteristics of the imaging system,
iv) formulating a Lagrange functional containing Lagrange multipliers $\lambda$, the Lagrange functional incorporating the measurement functions $m_k$ $(\Phi,\hat{\Phi})$ and the differential equation under boundary conditions,
v) minimizing the Lagrange functional by a gradient based method using Gateaux derivatives of the parameters and of the solution intensities to determine the solution intensity $\Phi$, the parameters $\kappa$ and the Lagrange multipliers $\lambda$,
vi) refining the finite element mesh on the basis of an error estimator, which is derived from the Lagrange multipliers $\lambda$ and repeating steps v) and vi) or stopping.

The steps (B) to vi) of this method are essentially similar to the steps a) to vi) described above, so that the whole description with respect to steps a) to vi) also applies to steps (B) to vi).

The imaging system comprises at least one detector, at least one source and in the case of an optical system optical components. For objectives and other lens systems, calibration has to account for:

- Geometrical aberrations due to the optical pathways
- Vignetting effects due to apertures or diaphragms in the optical pathway
- Spatially varying sensitivity of the lens system due to its numerical aperture and maximum lens diameter

For fiber-based systems, calibration has to account for:

- Inter-fiber variations of sensitivity due to small damages to the fiber, loss due to bending, coupling loss, varying quality of polished fiber-ends

CCDs usually have nearly constant sensitivity for each pixel element, but as soon as several CCDs or photodiodes, respectively photo multiplier tubes are employed, inter-detector variations of sensitivity have to be taken into account.

According to one embodiment of the present invention, the transmission losses and aberrations of optical components are determined by using an electroluminescent foil, which is imaged by the optical components. An electroluminescent foil (e.g. by Lumitech, Switzerland) is a foil that emits a homogeneous field (95% homogeneity over the whole surface) of very diffuse light. These foils can be directly imaged by a lens system, or they can be attached to detector fibers. The main advantage of this approach is the deformability of the foil; it can be bent to a high extent without changing the emission properties. An element with regularly spaced dots can be positioned between the electroluminescent foil and the optical components. For the measurement of lens aberrations of intensity or geometry, the foil can either be directly imaged, or a transparent slide with regularly spaced dots can be put in front of the foil, to image reference points for an image transformation to deform the image after acquisition. The dots can also be printed on glossy paper and illuminated by the light created by the foil. The dots in the acquired image can easily be detected by simple image processing algorithms, especially as the achieved homogeneity of the acquired image is significantly higher than with conventional illumination approaches.

The advantage of the electroluminescent foil over common approaches is the complete diffusivity of the light output which does not cast shadows, as well as its homogeneity and deformability. If the homogeneity is not sufficient, also a thin diffuser plate can be attached to the foil to increase homogeneity.

The present invention further refers to a method for the calibration of at least one detector sensitivity with respect to a certain fluorochrome for fluorescence imaging comprising

- filling a solution with a predetermined concentration of the fluorochrome into a transparent, hollow chamber,
- exciting the fluorochrome with light sources which emit light with an excitation wavelength of the fluorochrome, the light sources being aimed at the hollow chamber,
- detecting fluorescence light which leaves the chamber with the detector, the detector being positioned in such a way, that light traversing the chamber directly without exciting the fluorochrome is not detected.

  Preferably, the light sources are positioned side by side on one side of the chamber emitting parallel beams of light in the first direction into the chamber and the at least one detector is positioned to detect light coming from the chamber in a second direction with an angle $\alpha$ between the first and the second direction in the range between 30 and 150 degrees, most preferably with an angle of 90 degrees.

Fluorochromes usually exhibit a broad spectrum of emission wavelengths with a long tail into the red. Because of this broad emission spectrum, the different sensitivities of detectors for different photon energies as well as the use of different filter sets, for quantitative imaging a very careful calibration of the detectors with the respect of a certain fluorochrome has to be performed.

A novel chamber system is proposed, which is adaptable to any kind of fluorochrome soluble in a transparent liquid medium that can be used to calibrate lens systems as well as fiber systems, as long as all detector fibers are located on a plane.

The system consists of a transparent, hollow chamber, several light sources with line optics or the like, and photometers / absolutely calibrated photodiodes to measure the light intensity / power of the sources, all located within a dark chamber. The light sources are used to excite a fluorochrome that was filled (together with its solvent) into the transparent, hollow chamber in a previously determined concentration. Light sources can either be wide-spectrum lamp systems with an adjustable grating to select a certain excitation wavelength, or (diode) laser / high-power LED sources emitting the correct wavelength for optimal excitation of the fluorochrome under investigation.

The light created by the light sources is led into the hollow chamber from different sides, while the detection system to be calibrated looks onto the chamber from front. While the excitation light is traversing the chamber from side to side, none will be detected by the detection system. The traversing light excites the fluorochrome present in the chamber, which will emit light in all directions; the part of it leaving the chamber through the front is detected. Thus, the amount of light that is detected is directly proportional to the solid angle visible by the detector. The light sources are attenuated in the chamber but as the concentration of the fluorochrome (and thus the attenuation coefficient) is known, the different excitation and emission intensities can be taken into account in the calibration procedure.

The absolute intensity or power of fluorescence light entering the detector is known as soon as the solid angle respectively the numerical aperture of the detector is known; the created fluorescence intensity is given by the molar extinction coefficient, the concentration and the quantum yield of the fluorochrome, together with the excitation intensity.

The advantage of this approach over conventional approaches used in photospectrometers is the complete separability of excitation and emission light, as no excitation light reaches the detector. This is especially important due to the low Stokes shift possible with conventional fluorochromes.

The method according to the present invention can be used for tomographic reconstruction, for example in a field selected from

- Diffuse Optical Tomography (DOT) in continuous wave (CW) mode,
- fluorescence detection in CW mode,
- time-domain DOT,
- combined time-domain DOT and fluorescence detection,
- kinetic measurements, and
- optical tissue analysis.

These possible applications of the present invention are explained in greater detail below.

Diffuse Optical Tomography (DOT) in continuous wave (CW) mode

The time-independent diffusion equation used to describe photon propagation in diffuse media by a continuous (i.e. time-independent, constant; hence the name "continuous wave" or "CW" mode) source is:

$$\left(-\nabla D(\mathbf{r})\nabla + \mu_a(\mathbf{r})\right)\Phi(\mathbf{r}) = -S(\mathbf{r}), \tag{17}$$

where $D$ is called *diffusion coefficient* or *diffusion length,* $\mu_a$ is the *absorption coefficient, S* is the *source intensity function ,* and $\Phi$ is the *photon density.* Exact boundary conditions as derived through the radiative transfer equation are given by the Robin boundary condition:

$$\mathbf{n}(\mathbf{r})\cdot\nabla\Phi(\mathbf{r}) + 2AD(\mathbf{r})\Phi(\mathbf{r}) = 0\big|_{\partial\Omega}. \tag{18}$$

Here, $n$ is the surface normal at point $r$, *and A* is the *reflective index* of scattering domain versus non-scattering, outer space, and can be calculated by various methods. If domain boundaries are not too strongly curved, this boundary condition can be transformed into Zero boundary conditions by extending the domain by the so-called *extrapolated distance.*

Of importance is the relationship between diffusion length $D$ and absorption and reduced scattering coefficients $\mu_a$, $\mu'_s$:

$$D(\mathbf{r}) = \tfrac{1}{3}\left(\mu'_s + \alpha\mu_a\right)^{-1}, \quad \alpha \in [0;1] \tag{19}$$

While the exact value of $\alpha$ is unclear, it can often be assumed to be zero, especially if $\mu'_s$ is much larger than $\mu_a$ as in tissues.

It can be shown that coefficients D and $\mu_a$ cannot uniquely be determined for CW mode. However, if either *D*, $\mu_{a}$, or even $\boldsymbol{\mu}_s'$ is assumed constant (while $\alpha > 0$), the remaining coefficient can be uniquely determined.

Fluorescence Detection in CW mode

An emerging new field of imaging applications is molecular imaging, where molecular / sub-cellular processes in an organism lead either to the accumulation of fluorochromes (via targeted or activated probes), to the generation of fluorescent proteins, or the emission of photons through biochemical reactions (bioluminescence). As a simplification, fluorescence is considered to be a two-state quantum system, i.e. photons at the *excitation. wavelength* can lead to fluorescence which occurs at the *emission wavelength.* In reality there is, of course, a wide range of excitation wavelengths that will lead to a whole spectrum of emitted photons, and emitted photons can themselves lead to new emissions, but nevertheless the approximation is often employed and leads to useful results.

In the case of fluorescence, there is an external light source that induces emissions inside the domain (interior light source). Fluorochromes within domain $\Omega$ also increase the absorption at $\lambda$ by $\varepsilon c$, where *c* is the spatially varying concentration and $\varepsilon$ is the molar extinction coefficient of the fluorochrome at wavelength $\lambda$. The fluorochrome will emit at a wavelength $\lambda'$ with a probability of $\gamma^{\lambda'}$, the quantum yield, which is regarded as spatially invariant. Assuming that only two distinct wavelengths are present-excitation wavelength $\lambda_x$ and emission wavelength $\lambda_m$-results in the coupled equations:

$$
\begin{aligned}
\left(-\nabla D_x \nabla + \mu_{ax}(\mathbf{r}) + \varepsilon_x c(\mathbf{r})\right) \; \Phi_x(\mathbf{r}) &= \Theta_s \delta_0(\mathbf{r} - \mathbf{r}_s) \\
\left(-\nabla D_m \nabla + \mu_{am}(\mathbf{r})\right) \qquad \Phi_m(\mathbf{r}) &= \Theta_s \delta_0(\mathbf{r} - \mathbf{r}_s),
\end{aligned}
\tag{20}
$$

Under the assumption that the Stokes shift is small, the equality of the coefficients for both wavelengths can be considered equal, i.e. $D_x = D_m = D$ and $\mu_{ax} = \mu_{am} = \mu_a$. Also, $\varepsilon$ and $\gamma$ can be written without index. The first equation can then be rewritten as

$$
\varepsilon c(\mathbf{r})\Phi_x(\mathbf{r}) = \Theta_s \delta_0(\mathbf{r} - \mathbf{r}_s) - \left(-\nabla D\nabla + \mu_a(\mathbf{r})\right)\Phi_x(\mathbf{r}).
\tag{21}
$$

Substituting this in the second equation and dividing by $\gamma$, this yields

$$
\begin{aligned}
\left(-\nabla D\nabla + \mu_a(\mathbf{r}) + \varepsilon c(\mathbf{r})\right) \; \Phi_x(\mathbf{r}) \qquad\qquad &= \Theta_s \delta_0(\mathbf{r} - \mathbf{r}_s) \\
\left(-\nabla D\nabla + \mu_a(\mathbf{r})\right) \qquad \left(\tfrac{1}{\gamma}\Phi_m(\mathbf{r}) + \Phi_x(\mathbf{r})\right) &= \Theta_s \delta_0(\mathbf{r} - \mathbf{r}_s),
\end{aligned}
\tag{22}
$$

which is solved with respect to $\Phi_t = \frac{1}{\gamma}\Phi_m + \Phi_x$. This way, both equations become independent and can be computed completely in parallel, thus decreasing the total computation time needed for one forward solution by one half. The fluence rate due to fluorescence is recovered by calculating $\Phi_m = \gamma(\Phi_t - \Phi_x)$ afterwards, if desired. In an experimental setting, measurements are taken at the boundary at both wavelengths through the use of filters, so that boundary measurements $\Phi_x$, $\Phi_m$ can easily be combined to $\hat{\Phi}_t = \frac{1}{\gamma}\hat{\Phi}_m + \hat{\Phi}_x$ and used in an error estimator or measurement operator.

Time-domain DOT

For time-dependent sources/processes with time-invariant coefficients, the diffusion equation takes the form:

$$\left(v\tfrac{\partial}{\partial t} - \nabla D(\mathbf{r})\nabla + \mu_a(\mathbf{r})\right)\Phi(\mathbf{r},t) = -S(\mathbf{r},t)\,, \tag{23}$$

with $v$ being the speed of light, and $t$ being the time. The time frame considered is usually in the order of pico- to nanoseconds, repeated over a few seconds, so that variations of the coefficients that happen on larger time scales (> 1s) can be ignored.

In the case of time-domain optical tomography, coefficients $D$ and $\mu_a$ can uniquely be determined.

Combined time-domain DOT and fluorescence detection

Time-domain imaging can not only be used to estimate at the same time absorption and scattering, but also to distinguish between scattered and emitted light, as emitted light from fluorescence will appear at a later time, due to the fluorescence lifetime. While one could try to use the time-dependent fluorescence decay for a more complete mathematical framework that includes fluorescence lifetime and such for reconstruction, this is extremely computationally expensive. Furthermore, it is not known whether the mathematical formulation actually allows for independent estimation of this immense parameter set.

Another novel approach is to use a time-dependent model for scattered photons, and integrate over the fluorescence emission, to make it time-independent. While this guarantees that fluorescence emission and scattered light can be separated better than with filters, it also allows for reconstruction of both optical parameters as well as the power of the fluorescence emission. The mathematical model is:

$$\left(v\tfrac{\partial}{\partial t} - \nabla D(\mathbf{r})\nabla + \mu_a(\mathbf{r}) + \varepsilon c(\mathbf{r})\right)\Phi_x(\mathbf{r},t) = S(\mathbf{r},t)$$
$$\left(-\nabla D(\mathbf{r})\nabla + \mu_a(\mathbf{r})\right) \qquad \Phi_f(\mathbf{r}) = \gamma\varepsilon c(\mathbf{r})\int_t \Phi_x(\mathbf{r},t)\,\mathrm{d}t \tag{24}$$

Under the assumption that at $t=0$ there is no light in the system, and using the same arguments as in section "Fluorescence Detection in CW mode", the second equation transforms to:

$$\left(-\nabla D\nabla + \mu_a\right)\left(\tfrac{1}{\gamma}\Phi_f + \int_t \Phi_x\,\mathrm{d}t\right) = \int_t S\,\mathrm{d}t\,. \tag{25}$$

Note that the right side is simply the total power of the source, and that the time integral over $\Phi_x$ is the sum over all estimated time frames in the reconstruction.

This approach greatly reduces the necessary efforts, as the fluorescent field is now considered to be time-independent.

Kinetic Measurements

Instead of measuring at one time point only (even for time-dependent measurements, the time varies only on a very small scale, depending on domain size and speed of light in the medium), it is also possible to observe time-variations of the coefficients over a longer time period (> 1s).

This type of measurement can be performed as a series of independent measurements according to the aforementioned methods. In this case, the result consists of a series of estimated parameter sets for different time points.

Another method is the use of a kinetic model that describes the variation of parameters depending on time. A kinetic model describes the temporal variation of a parameter depending on a number of coefficients $k$, e.g. for the increase of absorption due to the uptake of fluorochrome in tissue:

$$\mu_a(\mathbf{r},t) = \mu_a^0(\mathbf{r}) + f\left(k(\mathbf{r}),t\right) \tag{26}$$

Function *f* can be any kind of kinetic model, in general it is the solution of a multicompartment differential equation, or the sum of such equations. In this case, the gradient of *L* with respect to $\mu$ is not meaningful, but rather the gradient with respect to the coefficient(s) *k*. These coefficients could be spatially discretized according to a sum representation to test functions *K* as before, i.e. k($\mathbf{r}$) = $\Sigma_i k_i K_i$. Thus, the gradient of the spatial integrals in *L* with respect to a coefficient *k* is expressed as:

$$\nabla_{k;K}\left(\varphi_{i,}f\left(k(\mathbf{r}),t\right)\Phi\right) = \lim_{h\to 0}\int_{\mathbf{r}}\varphi_i\Phi\,\frac{f(k(\mathbf{r})+hK,t)-f(k(\mathbf{r}),t)}{h}\,d\mathbf{r} \tag{27}$$

The same is also valid for any other temporal model of coefficient D (or $\kappa_1$, $\kappa_2$). Depending on the function *f*, the Gateaux derivative can be easily calculated. The expression of the temporal variation in terms of a function reduces the computational effort, as there are not coefficients for each time frame, but only one set of coefficients.

Tissue Analysis

For optical analysis of tissues, often multiple wavelengths are employed to enable a complete spectral analysis. In this case, one hopes to find the composition of for example tissue that can be composed of different media with different spectral properties. In this case, there are several equations of type (17), (20) or (23) for different wavelengths. Instead of independently calculating the optical properties and then trying to fit tissue components, it is also possible to estimate directly the different media types. In this case, the properties of the imaged object for wavelength $\lambda$ are composed of the known properties of different media *n* at different percentages $p^n$:

$$\mu_a^\lambda(\mathbf{r}) = \sum_n p^n(\mathbf{r})\mu_a^{\lambda,n}$$
$$D^\lambda(\mathbf{r}) = \sum_n p^n(\mathbf{r})D^{\lambda,n} \tag{28}$$

The spatially variant percentage *p* of component *n* can again be discretized using a sum representation of test functions, as all the coefficients before, i.e. $p_n(\mathbf{r}) = \sum_j \overline{p_j^n}\pi_j(\mathbf{r})$. Now, the gradients of the optical properties contained in *L* can be expressed as

$$\nabla_{p^n;\pi}\left(\varphi_{i,}\sum_{n,j}p_j^n\pi_j(\mathbf{r})\mu_a^{n,\lambda}\Phi^\lambda\right) = \sum_j\left(\varphi_{i,}\pi_j(\mathbf{r})\mu_a^{n,\lambda}\Phi^\lambda\right), \tag{29}$$

and similar for coefficient *D*. In this way, dozens of different wavelengths can be considered without dramatically increasing the number of unknowns or the computational time. This enables a completely novel type of imaging.

Certain aspects of the present invention are explained in greater detail below with reference to the drawing.

Description of the figures

Figure 1 shows schematically the determination of the boundary surface of nearly radially symmetric objects according to one embodiment of the present invention.

Figure 2 shows schematically the generation of a finite element mesh for cylindrical-like geometries according to one embodiment of the present invention.

Figure 3 shows a flow diagram presenting the principle of parameter-dependent refinement for the parameter estimation method according to the present invention and

Figure 4 shows schematically the calibration of fluorochrome sensitivity according to one embodiment of the present invention.

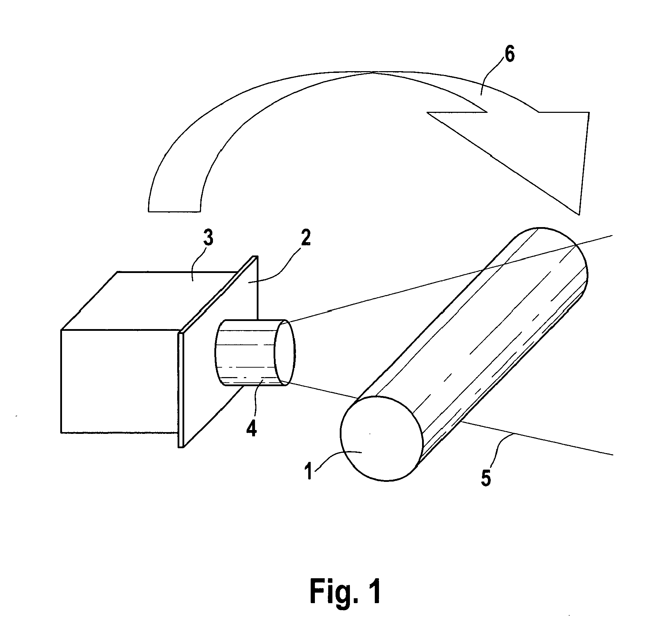

Figure 1 shows one possibility for determining the boundary surface of a nearly radially symmetric object in step (a) or (B) of the method according to the present invention.

The object 1 shown in Figure 1 is nearly cylindrical. It is placed in a very dark environment. The object 1 is illuminated by an electroluminescent foil 2 which is used as a diffuse light source. The camera 3 with an objective 4 acquires images of the object 1 within the field-of-view 5. The electroluminescent foil 2 is attached to the front surface of the camera 3 with the objective 4 of the camera 3 projecting through a hole in the electroluminescent foil 2. The camera 3 rotates in the rotating direction 6 around the object 1 to acquire a plurality of images under different projection angles. The acquired images are used to determine accurately the boundary surface of the object 1. This boundary surface is used as a basis for the method for tomographic reconstruction according to the present invention.

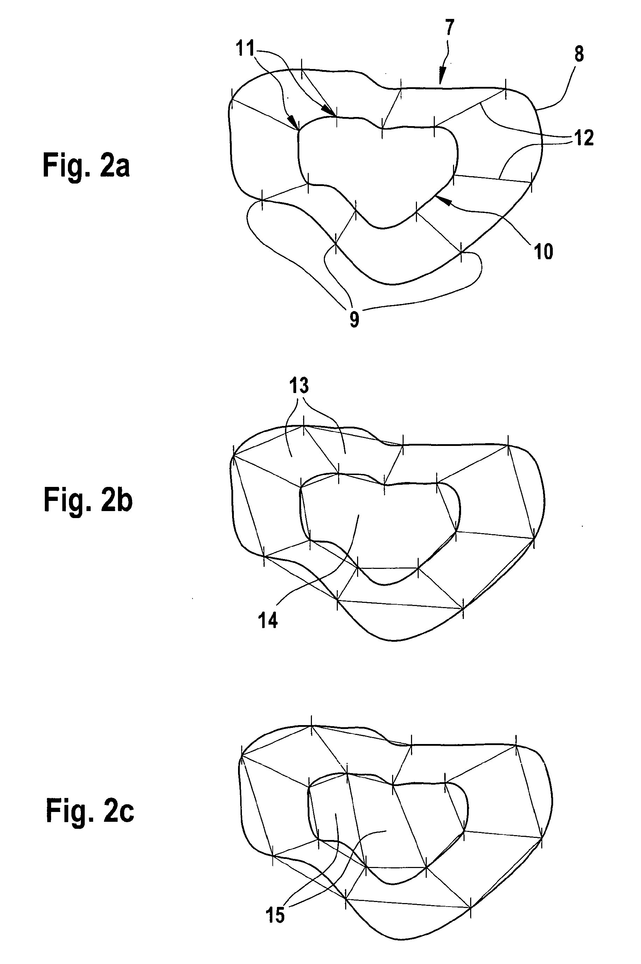

Figure 2 shows an example for generating a finite element mesh in step i) of the method according to the present invention.

An object 7 with a cylindrical-like geometry (like a small animal) has a boundary surface 8 on which equidistant points 9 are chosen (Figure 2a). The boundary 8 with the points 9 is duplicated inside the object 7 at a smaller size resulting in a smaller boundary duplicate 10 with duplicated points 11. The equidistant points 9 and duplicated points 11 are connected by connection lines 12. Then (Figure 2b) hexahedral elements 13 are formed, which are based on the equidistant points 9, the duplicated points 11 and the connection lines 12. The steps shown in Figures 2(a) and 2 (b) are repeated to create more and more inner hexahedral elements, until the inner area 14 gets small enough to be represented by simple hexahedral elements. The inner area 14 has to be split into inner hexahedral elements 15 to connect all the endpoints (duplicated points 11) of the formally created interior elements.

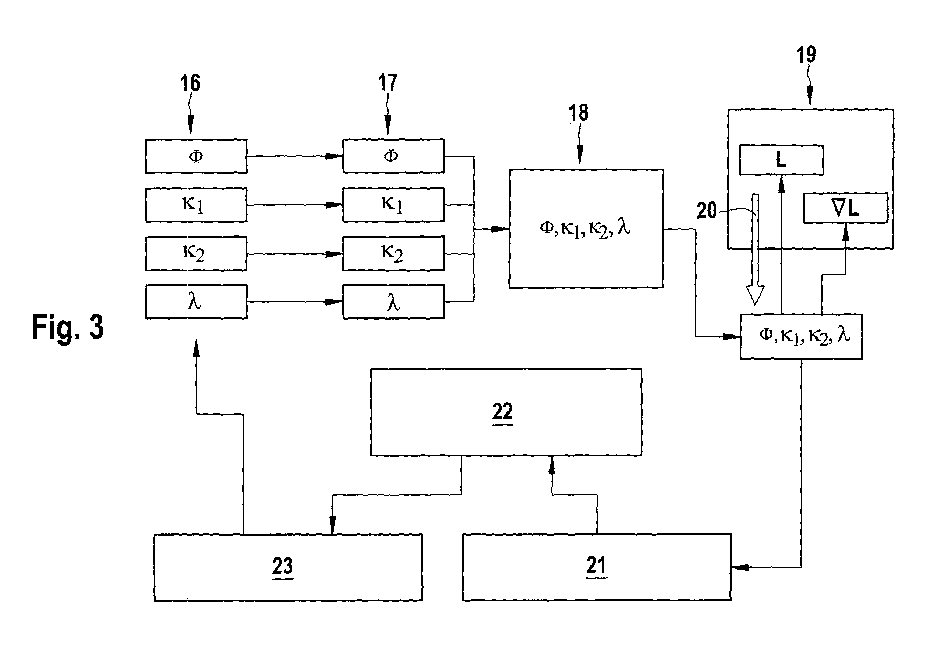

Figure 3 shows a flow diagram, which illustrates the procedure of refining the finite element mesh.

Starting from parameter sets 16, which are defined on a small number of cells (coarse mesh), values for hanging notes are extrapolated 17. In the next step, an extrapolation of the values for the finest grid 18 is carried out. These values enter an iterative solver step 19, in which the Lagrange functional and its minimum are calculated, updating 20 the solution intensities $\Phi$, the parameters $\kappa_1$, $\kappa_2$ and the Lagrange multipliers $\lambda$. An error estimator is evaluated 21 on the basis of which, the grid for each term $\Phi$, $\kappa_1$, $\kappa_2$, $\lambda$ is refined 22. The next step is directed towards finding hanging notes and appropriate interpolations 23. Then, the steps 16 to 23 can be repeated.

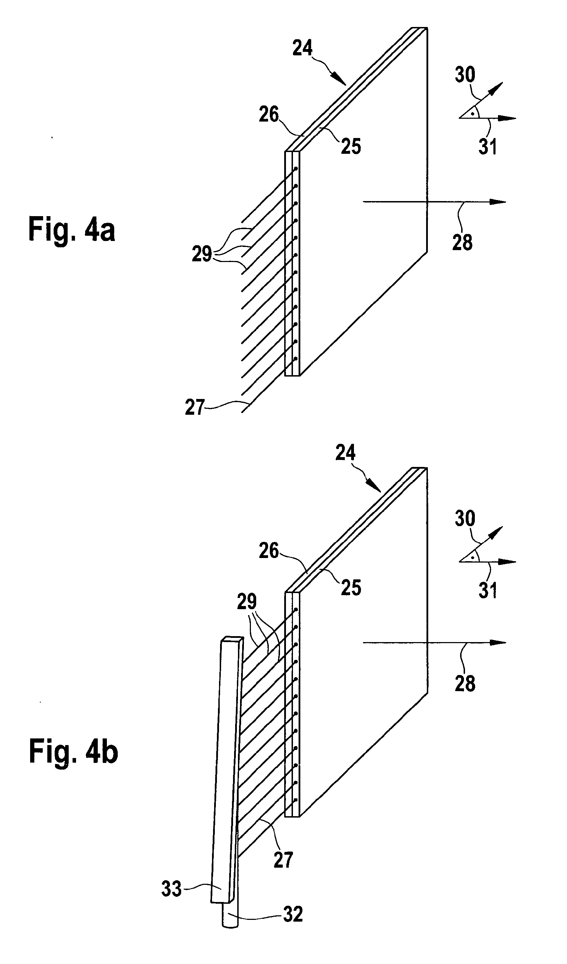

Figure 4 shows a method for the calibration of a detector with respect to a certain fluorochrome for fluorescence imaging.

A hollow chamber 24 with a transparent front plate 25 and an absorbing back plate 26 is filled with a solution with a predetermined concentration of the fluorochrome. The fluorochrome is excited with the light 27 of light sources of a known intensity with an excitation wavelength of the fluorochrome, the light 27 being aimed at the side of the hollow chamber 24. The fluorescence light 28 which leaves the chamber 24 is detected by detectors (not shown). The detectors are positioned in such a way, that they only detect the fluorescence light 28 emitted from the excited fluorochrome and not the light, which traverses the whole chamber, without exciting the fluorochrome. In Figure 4(a), the excitation light 27 is emitted by light sources, which are positioned side by side on one side of the chamber 24, which are emitting parallel beams of light 29 in a first direction 30 into the chamber 24. The detectors are positioned to detect the light 28 coming from the chamber in a second direction 31 with an angle of 90 degrees between the first direction 30 and the second direction 31. This arrangement ensures, that only fluorescence light 28 is detected by the detectors.

In Figure 4(b) the parallel beams of excitation light 27 are produced by an expanded laser beam 32 which is split into parallel beams 29 by a mirror 33, which is tilted slightly with reference to the direction of the laser beam 32.

Reference numbers

**[0121]**

1     object
2     electroluminescent foil
3     camera
4     objective
5     field of view
6     rotating direction
7     object
8     boundary surface
9     equidistant points

| | |
|---|---|
| 10 | boundary duplicate |
| 11 | duplicated points |
| 12 | connection lines |
| 13 | hexahedral elements |
| 14 | inner area |
| 15 | inner hexahedral elements |
| 16 | parameter sets |
| 17 | extrapolation of values for hanging notes |
| 18 | extrapolation of values for the finest grid |
| 19 | iterated solver step |
| 20 | update |
| 21 | evaluation of an error estimator |
| 22 | refinement |
| 23 | finding hanging notes and appropriate interpolations |
| 24 | hollow chamber |
| 25 | transparent front plate |
| 26 | absorbing back plate |
| 27 | excitation light |
| 28 | detected light |
| 29 | parallel beams of light |
| 30 | first direction |
| 31 | second direction |
| 32 | expanded laser beam |
| 33 | mirror |

**Claims**

1. A method for tomographic reconstruction on the basis of an elliptic differential equation with unknown parameters $\kappa$ comprising

   (a) determining a boundary surface $\delta\Omega$ of an object which is filling a space domain $\Omega$,
   (b) directing waves emitted from at least one source through the boundary surface $\delta\Omega$ into the object,
   (c) detecting intensities $\Phi$ (measured intensities) of waves emitted from the object's boundary surface $\delta\Omega$ on a part of said boundary surface $\delta\Omega$ with at least one detector by using a plurality of measurements and
   (d) processing the measured intensities $\Phi$ of waves emitted from the object's boundary surface to generate a tomographic image,
   wherein step (d) includes

   i) generating a finite element mesh with test functions, the finite element mesh representing the space domain $\Omega$ and the boundary surface $\delta\Omega$ of the object,
   ii) formulating the parameters $\kappa$ and solution intensities $\Phi$ of the elliptic differential equation on the basis of the finite element mesh and the test functions,
   iii) setting up a measurement function $m_k$ $(\Phi,\Phi)$ for each of the measurements which defines a measure for the difference between the measured intensities $\Phi$ and the solution intensities $\Phi$,
   iv) formulating a Lagrange functional containing Lagrange multipliers $\lambda$, the Lagrange functional incorporating measurement functions $m_k$ $(\Phi,\Phi)$ and the differential equation under boundary conditions,
   v) minimizing the Lagrange functional by a gradient based method using Gateaux-derivatives of the parameters and of the solution intensities to determine the solution intensities $\Phi$, the parameters $\kappa$ and the Lagrange multipliers $\lambda$,
   vi) refining the finite element mesh on the basis of an error estimator, which is derived from the Lagrange multipliers $\lambda$ and repeating steps v) and vi) or stopping.

2. The method as claimed in claim 1, wherein the elliptic differential equation can be written as

$$\left(\nu \tfrac{\partial}{\partial t}+\nabla \kappa_1(\mathbf{r})\nabla +\kappa_2(\mathbf{r})\right)\Phi(\mathbf{r},t)=s(\mathbf{r},t)\,,$$

with

$\kappa_1$, $\kappa_2$: unknown parameters
$\Phi$: solution intensity
$s$: source function
$t$: time.

3. The method as claimed in claim 1 or claim 2, wherein minimizing the Lagrange functional comprises the calculation of a plurality of weighted summations of scalar products of the test functions and derivatives of the test functions.

4. The method as claimed in claim 3, wherein at least some of the scalar products are calculated and stored before step v) is carried out.

5. The method of claim 3 or claim 4, wherein the scalar products are calculated in parallel by a plurality of processors.

6. The method as claimed in any of claims 1 to 5, wherein the boundary conditions can be one or a mix of the following types of boundary conditions

$$\text{Dirichlet:} \qquad \Phi\big|_{\Gamma \subset \Omega}=h\big|_{\Gamma \subset \Omega}\,, \qquad\qquad \Phi\big|_{t=t_0}=g\big|_{t=t_0}$$

$$\text{Neumann:} \qquad \mathbf{n}\cdot \nabla \Phi\big|_{\Gamma \subset \partial\Omega}=h\big|_{\Gamma \subset \partial\Omega}\,, \qquad \nu\tfrac{\partial}{\partial t}\Phi\big|_{t=t_0}=g\big|_{t=t_0}$$

$$\text{Robin:} \qquad \mathbf{n}\cdot \nabla \Phi\big|_{\Gamma \subset \partial\Omega}+f(\Phi)\big|_{\Gamma \subset \partial\Omega}=h\big|_{\Gamma \subset \partial\Omega}\,, \qquad \nu\tfrac{\partial}{\partial t}\Phi\big|_{t=t_0}+f(\Phi)\big|_{t=t_0}=h\big|_{t=t_0}$$

7. The method as claimed in any of claims 1 to 6, wherein the waves directed into the object in step (b) and the waves emitted from the object in step (c) are of different frequencies.

8. The method as claimed in any of claims 1 to 7 wherein the waves directed into the object in step (b) and the waves emitted from the object in step (c) are different kinds of waves selected from the group of light waves, ultrasound waves and sound waves.

9. The method as claimed in any of claims 1 to 8, wherein test functions are chosen which have only a local support on the finite element mesh.

10. The method as claimed in any of claims 1 to 8, wherein the test functions are based on the Fourier series.

11. The method as claimed in any of claims 1 to 10, wherein the finite element mesh is generated by using the standard Galerkin approach.

12. The method as claimed in any of claims 1 to 11, wherein after step ii) the elliptic differential equation is written as

$$\left(\nabla \varphi_i,\kappa_1(\mathbf{r})\nabla \Phi(\mathbf{r})\right)_{\Omega}+\left(\varphi_i,\kappa_2(\mathbf{r})\Phi(\mathbf{r})\right)_{\Omega}-\left(\varphi_i,\kappa_1(\mathbf{r})\mathbf{n}\cdot \nabla \Phi(\mathbf{r})\right)_{\partial\Omega}=\left(\varphi_i,s(\mathbf{r})\right)_{\Omega}$$

in the time-independent form or as

$$\tfrac{v}{\Delta t}\left(\Phi^{t+\Delta t}-\Phi^{t}\right)+\left(\nabla\varphi_{i},\kappa_{1}\nabla\Phi^{t}\right)_{\Omega}+\left(\varphi_{i},\kappa_{2}\Phi^{t}\right)_{\Omega}-\left(\varphi_{i},\kappa_{1}\mathrm{n}\cdot\nabla\Phi^{t}\right)_{\partial\Omega}=\left(\varphi_{i},s\right)_{\Omega}$$

or

$$\left(\tau_{j},v\tfrac{\partial}{\partial t}\Phi\right)_{T}+\left(\nabla\varphi_{i},\kappa_{1}\nabla\Phi^{t}\right)_{\Omega}+\left(\varphi_{i},\kappa_{2}\Phi^{t}\right)_{\Omega}-\left(\varphi_{i},\kappa_{1}\mathrm{n}\cdot\nabla\Phi^{t}\right)_{\partial\Omega}=\left(\varphi_{i}\tau_{j},s\right)_{\Omega,T}$$

in a time-dependent form with

$\kappa_1$, $\kappa_2$: unknown parameters
$v$ : propagation speed of waves in the medium (for optics: speed of light)
$\Phi$ : time-independent solution intensity
$\Phi'$: time-dependent solution intensity at time point $t$
$\varphi_i$: three-dimensional test function in space
$\tau_j$ : one-dimensional test function along the time axis
$\Delta t$ : size of time-step
$s$: source function
$T$: time domain (the time span considered)
$\Omega$: spatial domain of the imaged object
$\partial\Omega$ : boundary of the spatial domain
n: surface normal at a boundary point

13. The method as claimed in any of claims 1 to 12, wherein the differential equation under boundary conditions is incorporated in the Lagrange functional by using one of the following constraint sets:

$$h_{i}:=\left(\nabla\varphi_{i},\kappa_{1}\nabla\Phi\right)_{\Omega}+\left(\varphi_{i},\kappa_{2}\Phi\right)_{\Omega}-\left(\varphi_{i},\kappa_{1}\mathrm{n}\cdot\nabla\Phi\right)_{\partial\Omega}-\left(\varphi_{i},s\right)_{\Omega}=0$$

$$h_{t,i}:=\tfrac{v}{\Delta t}\left(\Phi^{t+\Delta t}-\Phi^{t}\right)+\left(\nabla\varphi_{i},\kappa_{1}\nabla\Phi^{t}\right)_{\Omega}+\left(\varphi_{i},\kappa_{2}\Phi^{t}\right)_{\Omega}-\left(\varphi_{i},\kappa_{1}\mathrm{n}\cdot\nabla\Phi^{t}\right)_{\partial\Omega}-\left(\varphi_{i},s^{t}\right)_{\Omega}=0$$

$$h_{i,j}:=\left(\tau_{j},v\tfrac{\partial}{\partial t}\Phi\right)_{T}+\left(\nabla\varphi_{i},\kappa_{1}\nabla\Phi^{t}\right)_{\Omega}+\left(\varphi_{i},\kappa_{2}\Phi^{t}\right)_{\Omega}-\left(\varphi_{i},\kappa_{1}\mathrm{n}\cdot\nabla\Phi^{t}\right)_{\partial\Omega}-\left(\varphi_{i}\tau_{j},s\right)_{\Omega,T}=0$$

with

$\kappa_1$, $\kappa_2$: unknown parameters
$v$ : propagation speed of waves in the medium (for optics: speed of light)
$\Phi$ : time-independent solution intensity
$\Phi^t$: time-dependent solution intensity at time point $t$
$\varphi_i$ : three-dimensional test function in space
$\tau_j$ : one-dimensional test function along the time axis
$\Delta t$ : size of time-step
$s$: source function
$T$: time domain (the time span considered)
$\Omega$: spatial domain of the imaged object

$\partial\Omega$ : boundary of the spatial domain
n: surface normal at a boundary point

**14.** The method as claimed in any of claims 1 to 13, wherein the Lagrange functional is written as

$$L = \sum_k \left| m_k(\Phi, \hat{\Phi}) \right| + \sum_i \frac{c_i}{2} \|h_i\|^2 + \sum_i \lambda_i h_i$$

with

$m_k$: measurement operator
$\Phi$: solution intensity
$\hat{\Phi}$ : measured solution intensity
$c_i$: penalty for infeasibility
$h_i$: one of the constraint functions $h_i$, $h_{ij}$, $h_{it}$ as described in claim 13, and summed over all its indices (i.e. the sum runs over all $i$, $ij$, or $it$)
$\lambda$: Lagrangian multiplier

**15.** The method as claimed in any of claims 1 to 14, wherein minimizing the Lagrange functional is starting from an initial solution of the Lagrange functional and changing the parameters $\kappa$ according to gradients.

**16.** The method as claimed in any of claims 1 to 15, wherein each parameter $\kappa$ is formulated in step ii) as a sum of different test functions.

**17.** The method as claimed in any of claims 1 to 16, wherein the parameters $\kappa$ are formulated in step ii) on the basis of different finite element meshes, on which the test functions are defined.

**18.** The method as claimed in any of claims 1 to 17, wherein all test functions are initially based on the same finite element mesh, the finite element mesh being refined in step vi) for each parameter individually on the basis of a parameter-based error estimator.

**19.** The method as claimed in any of claims 1 to 18, wherein the boundary surface $\delta\Omega$ of the object is determined in step (a)

• by using structured light and at least two cameras observing the object from different angles or
• by using a laser scanning system.

**20.** The method as claimed in any of claims 1 to 18, wherein the boundary surface $\delta\Omega$ of the object (1) is determined in step (a) by rotating a camera (3) around the object (1) and illuminating it with a very diffuse light source, the object (1) being placed in a dark environment, and the boundary surface $\delta\Omega$ of the object (1) being projected into two-dimensional planes using a plurality of projection angles.

**21.** The method as claimed in any of claims 1 to 20, wherein the parameters are selected from the group of source intensity, absorption coefficient, dispersion coefficient, diffusion length, reduced scattering coefficients and parameters derived therefrom.

**22.** The method as claimed in any of claims 1 to 21, wherein a calibration of the at least one detector's sensitivity and of the at least one source's intensity are carried out before step (a).

**23.** The method as claimed in claim 22, wherein the calibration takes transmission losses and aberrations of optical components into account.

**24.** The method as claimed in claim 23, wherein the transmission losses and aberrations are determined by using an electroluminescent foil, which is imaged by the optical components.

**25.** The method of claim 24, wherein an element with regularly spaced dots is positioned between the electroluminescent foil and the optical components.

26. The method as claimed in any of claims 22 to 25, wherein the calibration of at least one detector's sensitivity with respect to a certain fluorochrome for fluorescence imaging comprises

> • filling a solution with a predetermined concentration of the fluorochrome into a transparent, hollow chamber (24),
> • exciting the fluorochrome with light sources which emit light (27) with an excitation wavelength of the fluorochrome, the light sources being aimed at the hollow chamber (24),
> • detecting fluorescence light (28) which leaves the chamber (24) with the detector.

27. The method as claimed in 26, wherein the light sources are positioned side by side on one side of the chamber emitting parallel beams of light (27, 29) in a first direction (30) into the chamber (24) and at least one detector as positioned to detect light (28) coming from the chamber (24) in a second direction (31) with an angle $\alpha$ between the first (30) and the second (31) direction in the range from 30 degrees to 150 degrees.

28. The method as claimed in any of the claims 1 to 27 used for tomographic reconstruction in a field selected from

> • diffuse optical tomography (DOT) in continuous wave (CW) mode,
> • fluorescence detection in CW mode,
> • time-domain DOT,
> • combined time-domain DOT and fluorescence detection,
> • kinetic measurements and
> • optical tissue analysis.

Fig. 1

**Fig. 2a**

**Fig. 2b**

**Fig. 2c**

Fig. 3

Fig. 4a

Fig. 4b

**European Patent Office**

## EUROPEAN SEARCH REPORT

Application Number

EP 05 01 1797

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARRIDGE S R: "Time domain optical imaging" BIOMEDICAL IMAGING: MACRO TO NANO, 2004. IEEE INTERNATIONAL SYMPOSIUM ON ARLINGTON,VA, USA APRIL 15-18, 2004, PISCATAWAY, NJ, USA,IEEE, 15 April 2004 (2004-04-15), pages 1486-1489, XP010774148 ISBN: 0-7803-8389-3 * page 1486, left-hand column, line 6 - page 1487, right-hand column, line 26 * ----- | 1 | G06T11/00 G01N21/47 |
| A | JOSHI ET AL.: "adaptive finite element based tomography for fluorescence optical imaging in tissue" OPTICS EXPRESS, vol. 12, no. 22, 1 November 2004 (2004-11-01), pages 1-16, XP002353720 usa * page 5, line 11 - page 6, line 37 * * page 9, line 10 - line 46 * ----- | 1-28 | |
| A | BABUSKA I: "THE FINITE ELEMENT METHOD WITH LAGRANGIAN MULTIPLIERS" NUMERISCHE MATHEMATIK, SPRINGER VERLAG, BERLIN,, DE, vol. 20, no. 3, June 1973 (1973-06), pages 179-192, XP008055175 ISSN: 0029-599X * page 179, line 1 - line 19 * ----- | 1,3,6, 11,14,15 | TECHNICAL FIELDS SEARCHED (IPC) G01N G06T |
| A | US 5 754 181 A (AMDURSKY ET AL) 19 May 1998 (1998-05-19) * column 5, line 25 - line 30 * * column 7, line 26 - line 59 * ----- -/-- | 1 | |

The present search report has been drawn up for all claims

| Place of search | Date of completion of the search | Examiner |
|---|---|---|
| The Hague | 18 November 2005 | Perez Molina, E |

EPO FORM 1503 03.82 (P04C01)

**European Patent Office**

## EUROPEAN SEARCH REPORT

Application Number

EP 05 01 1797

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROY ET AL.: "Fluorescence-enhanced optical tomography using referenced measurements of heterogeneous media" IEEE TRANSACTION ON MEDICAL IMAGING, vol. 22, no. 7, July 2003 (2003-07), pages 824-836, XP002353721 usa | | |

-----

TECHNICAL FIELDS SEARCHED (IPC)

The present search report has been drawn up for all claims

| Place of search | Date of completion of the search | Examiner |
|---|---|---|
| The Hague | 18 November 2005 | Perez Molina, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 729 261 A1

**ANNEX TO THE EUROPEAN SEARCH REPORT
ON EUROPEAN PATENT APPLICATION NO.**

EP 05 01 1797

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2005

| Patent document cited in search report | Publication date | Patent family member(s) | Publication date |
|---|---|---|---|
| US 5754181 A | 19-05-1998 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9512132 A
- WO 03102558 A
- US 6600168 B

### Non-patent literature cited in the description

- Parallel programming of gradient-based iterative image reconstruction schemes for optical tomography. *Computer Methods and Programmes in Biomedicine,* 2004, vol. 73, 101-113
- **ROLAND BECKER ; BORIS VEXLER.** A Posteriori Error Estimation for Finite Element Discretization of Parameter Identification Problems. *Numer. Math.,* 2004, vol. 96 (3), 435-459
- **ASCHER ; HABER.** A multigrid method for distributed parameter estimation problems. *Electronic Transactions on Numerical Analysis,* 2003, vol. 15, 1-17
- **ASCHER ; HABER.** Grid Refinement and Scaling for Distributed Parameter Estimation Problems. *Inverse Problems,* 2001, vol. 17 (3
- **FALK.** Error Estimates for the Numerical Identification of a Variable Coefficient. *Mathematics of Computation,* 1983, vol. 40 (162), 537-546
- **BLUM ; SUTTMEIER.** Weighted Error Estimates for Finite Element Solutions of Variational Inequalities. *Computing,* 2000, vol. 65, 119-134
- **BECKER ; KAPP ; RANNACHER.** Adaptive Finite Element Methods for Optimal Control of Partial Differential Equations: Basic Concept. *SIAM Journal on Control and Optimization,* 2000, vol. 39 (1), 113-132